# FASCICULE DE BREVET EUROPEEN

(11) **EP 2 198 802 B1**
(45) Date de publication et mention de la délivrance du brevet: **16.10.2013**
(21) Numéro de dépôt: 09306215.6
(22) Date de dépôt: 11.12.2009
(51) Int. Cl.: A61C 7/36

(54) **Dispositif d'articulation d'un ensemble orthodontique apte à provoquer un déplacement d'une mandibule par rapport à un maxillaire**
Gelenkvorrichtung eines kieferorthopädischen Apparats, der in der Lage ist, eine Verschiebung des Unterkiefers gegenüber dem Oberkiefer zu bewirken
Device for articulating an orthodontic system capable of causing the movement of a mandible in relation to a maxilla

(30) Priorité: 19.12.2008 FR 0858843
(43) Date de publication de la demande: 23.06.2010
(73) Titulaire: Orthogem Developpement, 63000 Clermont-Ferrand (FR)
(72) Inventeur: Marie-Catherine, Franck, 63130, Royat (FR)
(74) Mandataire: Thivillier, Patrick

(56) Documents cités:
- EP-A- 1 712 203
- WO-A1-2009/024118
- FR-A1- 2 887 135
- US-A- 5 620 321
- US-A- 5 829 975
- US-A1- 2007 190 477
- US-B1- 6 234 792
- US-B1- 6 361 315

## Description

L'invention se rattache au secteur technique des orthèses d'avancement mandibulaire.

Différentes solutions ont été proposées pour provoquer un déplacement de la mandibule par rapport au maxillaire.

Le but recherché est de déplacer en avant la mandibule par rapport à sa position d'origine d'une très faible distance de l'ordre de quelques millimètres, dans un premier temps, afin, notamment, de stimuler la croissance. Cette propulsion mandibulaire peut être utilisée pour augmenter le flux respiratoire, afin de régler les problèmes de syndromes d'apnée du sommeil.

L'invention concerne plus particulièrement un ensemble orthodontique du type parfaitement connu pour un homme du métier, sous le nom de « orthèse de Herbst » ou « bielles de Herbst ».

Pour l'essentiel, ce type d'orthèse présente des gouttières coopérant, respectivement, avec la rangée de dents du haut et la rangée de dents du bas. Ces gouttières sont généralement réalisées dans un matériau rigide, par exemple en résine acrylique thermoformée, et sont reliées l'une à l'autre par un système de biellettes montées avec capacité de coulissement. Plus particulièrement, deux biellettes métalliques sont disposées, respectivement, de chaque côté d'une armature rendue solidaire d'une partie de la gouttière supérieure et de la gouttière inférieure. Les deux biellettes sont reliées avec capacité d'articulation sur l'armature, sensiblement au niveau des premières molaires pour la gouttière supérieure et sensiblement au niveau de la canine pour la gouttière inférieure. L'articulation des biellettes, au niveau des parties correspondantes de l'armature, comme indiqué précédemment, s'effectue au moyen d'un axe disposé dans un plan sensiblement horizontal, de sorte que le mouvement d'articulation des biellettes est limité dans un plan vertical.
Ce déplacement limité de la mandibule par rapport au maxillaire, dans une direction postéro-antérieure, n'est pas satisfaisant. Il s'est avéré important que le patient, équipé de ce type d'ensemble orthodontique, puisse également avoir une grande liberté de déplacement latéral de la mandibule par rapport au maxillaire. On a pu également constater que ce type d'articulation, à axe horizontal, est encombrant et rend délicate la coopération des biellettes des gouttières supérieure et inférieure.

On connaît également des systèmes d'articulation d'un ensemble orthopédique dans lequel les biellettes sont accouplées avec les gouttières supérieure et inférieure, au moyen d'une rotule. On peut citer, par exemple, l'enseignement du brevet US 5,620,321. Toutefois, la solution décrite dans ce brevet n'est pas totalement satisfaisante étant donné qu'il n'est pas possible d'obtenir des mouvements de latéralité.

Une autre solution est connue du document US 6361315 sur lequel se base la forme en deux parties de la revendication 1.

L'invention s'est fixée pour but de remédier à ces inconvénients d'une manière simple, sûre, efficace et rationnelle.

Le problème que se propose de résoudre l'invention est de conférer une totale liberté d'articulation des biellettes tant dans un plan antéro-postérieur que dans un plan latéral, et ceci dans un encombrement réduit.

Pour résoudre un tel problème, il a été conçu et mis au point un dispositif d'articulation d'un ensemble orthodontique apte à provoquer un déplacement d'une mandibule par rapport à un maxillaire du type de ceux connus et définis dans la première partie de la revendication 1.

Selon l'invention, le problème posé est résolu par les caractéristiques relevant de la deuxième partie de la revendication 1.

Il résulte de ces caractéristiques une parfaite maîtrise des mouvements de propulsion mandibulaire (mouvement antéro-postérieur) et de latéralité, évitant tout phénomène de basculement de l'embout d'accouplement et, par conséquent, des biellettes.

Dans une forme de réalisation et du côté de la mandibule, l'embout présente un chambrage pour être fixé coaxialement à la biellette.

Dans une forme de réalisation et du côté du maxillaire, l'embout est fixé en superposition de l'une des extrémités de la biellette.

Pour résoudre le problème posé d'améliorer l'articulation des biellettes, tout en respectant un faible encombrement, l'élément support est déporté latéralement par rapport à la partie d'armature correspondante. L'élément support présente un manchon d'accouplement avec la partie d'armature correspondante, ledit manchon présentant une douille déportée dans laquelle est fixé l'axe de la rotule.

L'invention est exposée ci-après plus en détail à l'aide des figures des dessins annexés dans lesquels :
- la figure 1 est une vue en perspective à caractère schématique montrant un ensemble orthodontique dont les gouttières supérieure et inférieure sont reliées par un système de biellettes montées avec capacité d'articulation, selon les caractéristiques du dispositif de l'invention ;
- la figure 2 est une vue en perspective avant montage de l'extrémité de l'une des biellettes sur l'élément support considéré du côté de la mandibule ;
- la figure 3 est une vue en perspective avant montage de l'extrémité de la biellette sur l'élément support considéré du côté du maxillaire ;
- la figure 4 est une vue partielle en coupe longitudinale montrant le principe de l'articulation des biellettes par rapport à un élément support dans un plan antéro-postérieur d'environ 90° ;
- la figure 5 est une vue en plan correspondant à la figure 4 montrant le principe d'articulation dans un plan latéral (360°) ;
- la figure 6 est une vue en perspective après accouplement des biellettes et avant montage sur l'élément support correspondant.

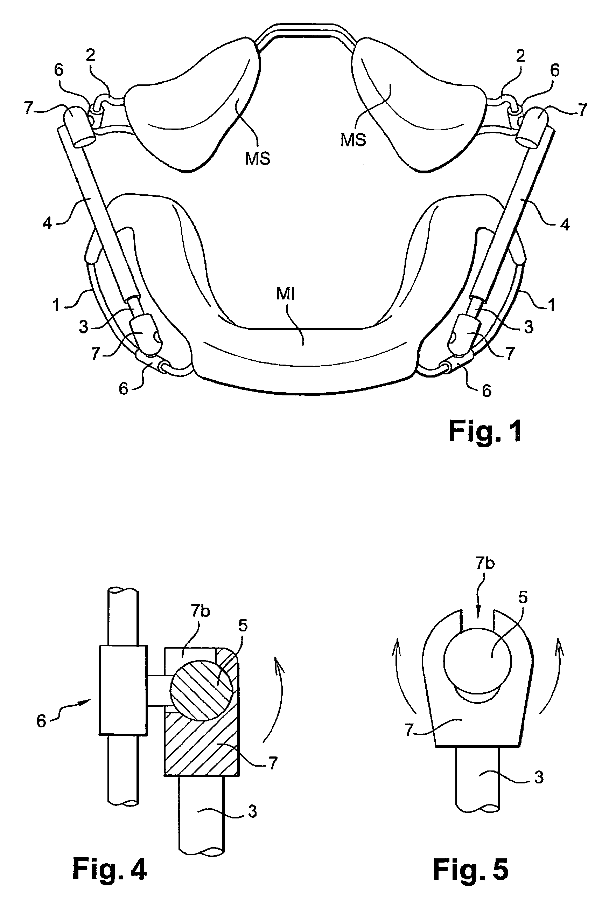

On a illustré figure 1, à titre d'exemple indicatif nullement limitatif, un ensemble orthodontique pour le déplacement de la mandibule par rapport au maxillaire. D'une manière parfaitement connue pour un homme du métier, cet ensemble peut être constitué par une gouttière supérieure (GS) coopérant avec une partie de la denture du maxillaire et d'une gouttière inférieure (GI) coopérant avec la totalité ou une partie de la denture de la mandibule.
Comme déjà indiqué, chaque gouttière (GS) et (GI) est réalisée par thermoformage ou bien en résine avec la technique « poivre et sel » en ajoutant une piste sur la partie occlusale mandibulaire et sur la partie occlusale maxillaire. En outre, chacune des gouttières (GS) et (GI) présente des armatures (1) et (2) pour l'accouplement, avec capacité d'articulation, d'un système de biellettes (3) et (4) montées avec capacité de coulissement linéaire guidé en translation. Ce montage est réalisé d'une manière symétrique de part et d'autre de l'axe longitudinal de chacune des gouttières.

Dans l'exemple illustré, chacune des biellettes (3) est articulée sur une partie de l'armature (1) de la gouttière inférieure relative à la mandibule, tandis que chacune des biellettes (4) est articulée sur une partie de l'armature (2) relatif à la gouttière supérieure du maxillaire.

Selon une caractéristique à la base de l'invention, le dispositif d'articulation comprend, pour chaque biellette (3) et (4), des moyens d'accouplement du type à rotule, aptes à permettre, dans un plan horizontal, une articulation d'environ 360° de la biellette correspondante et, dans un plan vertical, une articulation d'environ 90° au moins de la biellette correspondante. D'une manière importante, la rotule (5) est solidaire d'un axe (5a) orienté sensiblement perpendiculairement à un élément support (6) solidaire d'une partie de l'armature correspondante (1) ou (2).

Le support (6) est solidaire de l'armature (1) ou (2) par tout moyen connu et approprié, par exemple, par clipage.

Pour chacune des biellettes (3) et (4), les moyens d'accouplement sont constitués par un embout (7) présentant une cage hémisphérique (7a) apte à recevoir la rotule (5). D'une manière importante, cette cage hémisphérique (7a) est en communication avec une ouverture (7b) débouchant d'un côté de l'embout et formé perpendiculairement à son axe longitudinal et dans un plan parallèle à celui recevant l'axe (5a) de la sphère (5).

Après accouplement de l'embout (7) sur la sphère (5) rendue solidaire de l'élément support (6), la fente (7b) permet un déplacement vertical de la biellette (3) ou (4) d'environ 90°. Il apparaît donc que cette articulation du type à rotule, avec la sphère (5) en combinaison avec la fente ou ouverture (7b) de l'embout (7), permet, dans un plan horizontal, un déplacement d'environ 360° (figure 5) et, dans un plan vertical, un déplacement d'environ 90° (figure 4), tout en interdisant un effet de basculement dudit embout. On obtient donc une parfaite maîtrise des mouvements de propulsion mandibulaire et de latéralité.

La partie de l'élément support (6) recevant la rotule (5) est déportée latéralement par rapport à la partie d'armature correspondante (1) ou (2). Par exemple, l'élément support (6) présente un manchon d'accouplement (6a) fixé sur les armatures (1) et (2), lequel manchon (6a) présente une douille (6b) où est fixé l'axe (5a) de la rotule (5).

On rappelle, d'une manière connue, que la zone d'articulation des biellettes (3) et (4), par rapport aux parties correspondantes des armatures (1) et (2), est déterminée pour correspondre généralement au niveau des premières molaires pour la gouttière du maxillaire et au niveau des canines pour la gouttière de la mandibule. L'élément support (6) est donc positionné et fixé en conséquence sur les parties d'armatures correspondantes (1) et (2).

D'une manière avantageuse, l'axe (5a) de la rotule (5) est fixé sur l'élément support (6) avec capacité de démontage. Par exemple, l'axe (5a) de la rotule est fileté pour être vissé dans un trou taraudé (6b1) du support (6). Outre cette capacité de démontage en résultant, l'accouplement de chacune des biellettes (3) et (4) avec la douille (7) sur l'élément support (6), en combinaison avec la rotule (5), est particulièrement simple et rapide. En effet, il suffit de positionner l'embout (7) sur la partie correspondante du support (6) et d'introduire l'axe (5a) de la sphère (5) dans la cage hémisphérique (7a) de l'embout (7), afin de le visser dans le trou taraudé (6b) de l'élément support (6).

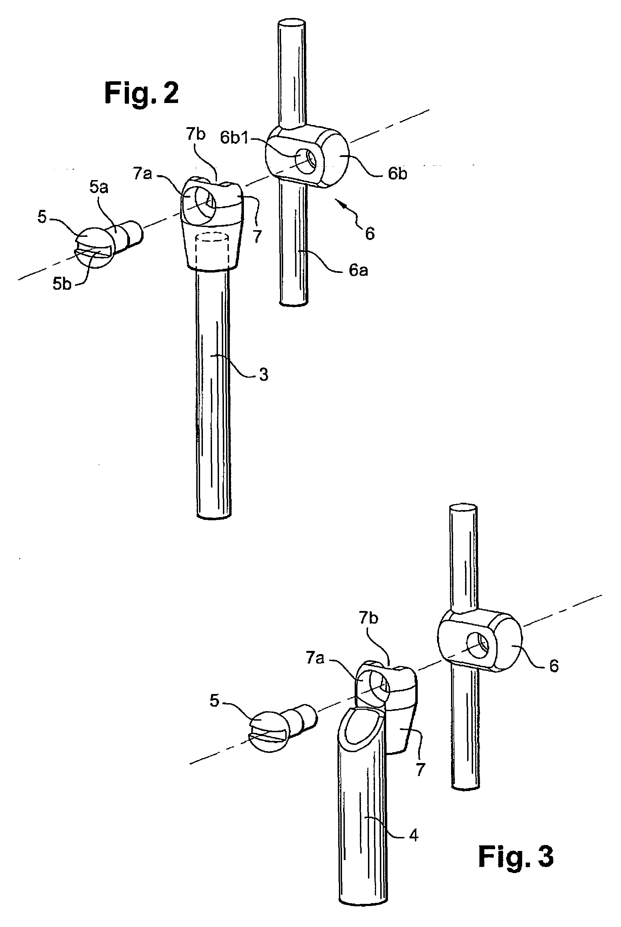

Dans une forme de réalisation illustrée figure 2, l'embout d'accouplement (7) est disposé coaxialement à la biellette (3). Par exemple, l'embout (7) présente un chambrage (7c) dans lequel est fixée, par tout moyen connu et approprié, l'extrémité de la biellette (3). Cette solution est, par exemple, utilisée pour les biellettes accouplées avec capacité d'articulation du côté de la mandibule.

Dans la forme de réalisation illustrée figure 4, l'embout d'accouplement (7) est fixé en superposition de l'extrémité de la biellette (4). Cette forme de réalisation est, par exemple, utilisée pour les biellettes accouplées avec capacité d'articulation du côté du maxillaire.

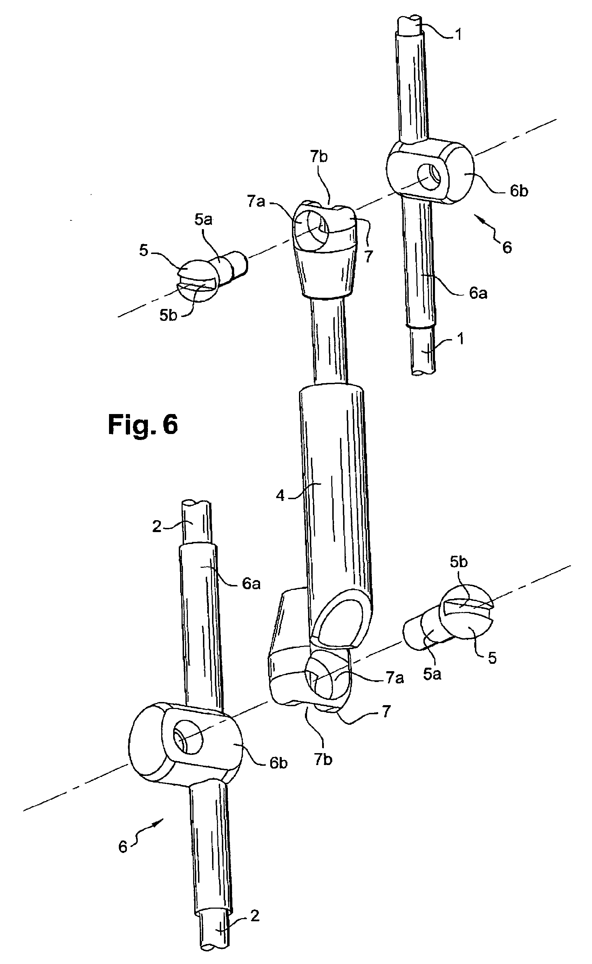

D'une manière classique et parfaitement connue pour un homme du métier, la biellette (3), par exemple, est montée avec capacité de coulissement linéaire guidé à l'intérieur de la biellette (4). Autrement dit, par exemple, la biellette (3) est constituée par un corps cylindrique plein, tandis que la biellette (4) est constituée par un tube. On renvoie à la figure 6 qui montre l'accouplement des deux biellettes avant montage sur leurs éléments supports respectifs (6), dans les conditions indiquées précédemment.

A noter que, pour faciliter le montage et le démontage du dispositif d'articulation, la rotule (5) présente une empreinte (5b) apte à coopérer avec un organe de manoeuvre du type tournevis, par exemple.

Après accouplement, le tube constituant la biellette (4) vient en butée contre l'embout (7) du corps cylindrique ou tige, constituant la biellette (3). Des bagues peuvent être rajoutées sur la tige cylindrique afin de procéder au réglage de l'écartement.

Les avantages ressortent bien de la description, en particulier on souligne et on rappelle :
- la diminution de l'encombrement et le confort en résultant ;
- la grande liberté dans les mouvements latéraux ;
- la facilité de montage et de démontage du dispositif d'articulation par rapport aux armatures ou autres, étant souligné qu'éventuellement la rotule peut être fixée dans les conditions indiquées, dans le matériau constituant les gouttières, dans d'autres agencements orthodontiques, sur des appareils multi-attaches, ...
- le design de l'articulation, notamment au niveau de l'embout (7), est déterminé pour protéger l'éventuel débordement de la biellette, afin d'éviter tout risque de blessure ;
- l'oscillation sur deux axes sur un point 0, sans basculement et sans limite latérale, avec un axe rotule disposé verticalement.

## Revendications

1. Dispositif d'articulation d'un ensemble orthodontique apte à provoquer un déplacement d'une mandibule par rapport à un maxillaire, équipés chacun d'une armature inférieure (1) et d'une armature supérieure (2) reliées par un système de biellettes (3) et (4) montées avec capacité de coulissement, ledit dispositif comprend, pour chaque biellette (3) et (4), des moyens d'accouplement, avec une partie des armatures correspondantes, du type à rotule (5), la rotule (5) étant solidaire d'un axe (5a) orienté, sensiblement perpendiculairement, à un élément support (6) solidaire d'une partie de l'armature correspondante, ledit axe étant introduit dans une cage hémisphérique (7a) d'un embout (7) fixé à chaque biellette (3) et (4) pour être vissé dans l'élément support (6), **caractérisé en ce que** ledit axe (5a) est disposé verticalement et **en ce que** ladite cage (7a) est en communication avec une ouverture (7b) **débouchant d'un côté dudit embout (7) et formée perpendiculairement à l'axe longitudinal** dudit embout **et dans un plan parallèle à celui recevant l'axe (5a) de la rotule,** pour permettre une articulation des biellettes d'environ 90° dans le plan vertical et d'environ 360° dans un plan horizontal, en évitant tout basculement de l'embout (7).

2. Dispositif selon la revendication 1, **caractérisé en ce que** l'embout (7) présente un chambrage (7c) pour être fixé coaxialement à la biellette (3).

3. Dispositif selon l'une quelconque des revendications 1 et 2, **caractérisé en ce que** l'embout (7) est fixé en superposition de l'une des extrémités de la biellette (4).

4. Dispositif selon la revendication 1, **caractérisé en ce que** l'élément support (6) est déporté latéralement par rapport à la partie de l'armature correspondance.

5. Dispositif selon la revendication 1, **caractérisé en ce que** l'élément support (6) présente un manchon d'accouplement fixé sur la partie de l'armature correspondante, ledit manchon présentant une douille déportée dans laquelle est fixé l'axe (5a) de la rotule (5).

## Patentansprüche

1. Gelenkvorrichtung eines kieferorthopädischen Apparats, der in der Lage ist, eine Verschiebung des Unterkiefers gegenüber dem Oberkiefer zu bewirken, die jeweils mit einem unteren Bügel (1) und einem oberen Bügel (2) ausgestattet sind, die durch ein System von Gelenkstangen (3) und (4) verbunden sind, die mit einer Gleitbefähigung angebracht sind, wobei die Vorrichtung für jede Gelenkstange (3) und (4) Einrichtungen zum Kuppeln mit einem Teil der entsprechenden Bügel der Art mit Kugelgelenk umfasst, wobei das Kugelgelenk (5) fest mit einer Achse (5a) verbunden ist, die im Wesentlichen senkrecht zu einem Stützelement (6) ausgerichtet ist, das fest mit einem Teil des entsprechenden Bügels verbunden ist, **dadurch gekennzeichnet, dass** die Achse in einen halbkugelförmigen Käfig (7a) eines an jeder Gelenkstange (3) und (4) befestigten Ansatzes (7) eingeführt ist, um in das Stützelement (6) eingeschraubt zu werden, wobei die Achse (5a) vertikal angeordnet ist, und dass der Käfig mit einer Öffnung (7b) in Verbindung steht, die auf einer Seite des Ansatzes (7) mündet und senkrecht zur Längsachse des Ansatzes und in einer Ebene ausgebildet ist, die senkrecht zu derjenigen ist, weiche die Achse (5a) des Kugelgelenks aufnimmt, um eine Anlenkung der Gelenkstangen von ungefähr 90° in der vertikalen Ebene und ungefähr 360° in einer horizontalen Ebene zuzulassen, wobei jegliches Verschwenken des Ansatzes (7) vermieden wird.

2. Vorrichtung nach Anspruch 1, **dadurch gekennzeichnet, dass** der Ansatz (7) eine Aussparung (7c) aufweist, um koaxial zur Gelenkstange (3) fixiert zu sein.

3. Vorrichtung nach einem der Ansprüche 1 und 2, **dadurch gekennzeichnet, dass** der Ansatz (7) eines der Enden der Gelenkstange (4) übergreifend fixiert ist.

4. Vorrichtung nach Anspruch 1, **dadurch gekennzeichnet, dass** das Stützelement (6) in Bezug auf den Teil des entsprechenden Bügels seitlich versetzt ist.

5. Vorrichtung nach Anspruch 1, **dadurch gekennzeichnet, dass** das Stützelement (6) eine Kupplungsmuffe aufweist, die an dem Teil des entsprechenden Bügels befestigt ist, wobei die Muffe eine versetzte Hülse aufweist, in der die Achse (5a) des Kugelgelenks (5) fixiert ist.

## Claims

1. A device for articulating an orthodontic assembly capable of causing a displacement of a mandible relative to a maxilla, each equipped with a lower armature (1) and with an upper armature (2) connected by a system of slidably-assembled connecting rods (3) and (4), said device comprises, for each connecting rod, means of coupling with a portion of the corresponding armatures, of spherical joint type (5), the spherical joint (5) being rigidly attached to an axis (5a) oriented substantially perpendicularly to a support element (6) rigidly attached to a portion of the corresponding armature, said axis being introduced into a hemispherical cage (7a) of an end piece (7) fixed to each connecting rod (3) and (4) to be screwed in the support element (6), **characterized in that** said axis (5a) is arranged vertically and **in that** said cage (7a) is in communication with an opening (7b) emerging on one side of said end piece (7) and formed perpendicularly to the longitudinal axis of said end piece and in a plane parallel to that receiving the axis (5a) of the spherical joint, to allow an articulation of the connecting rods of approximately 90° in the vertical plane and of approximately 360° in a horizontal plane, while avoiding any tilting of the end piece (7).

2. The device of claim 1, **characterized in that** the end piece (7) has a recess (7c) to be fixed coaxially to the connecting rod.

3. The device of any of claims 1 and 2, **characterized in that** the end piece (7) is fixed in a position stacked on one of the ends of the connecting rod (4).

4. The device of claim 1, **characterized in that** the support element (6) is laterally offset with respect to the corresponding armature portion.

5. The device of claim 1, **characterized in that** the support element (6) has a coupling sleeve fixed to the corresponding armature portion, said sleeve having an offset socket having the axis (5a) of the spherical joint (5) fixed therein.
